# EUROPEAN PATENT SPECIFICATION

(11) **EP 0 410 432 B1**
(45) Date of publication and mention of the grant of the patent: **13.03.1996**
(21) Application number: 90114289.3
(22) Date of filing: 25.07.1990
(51) Int. Cl.: B29C 44/00, E04C 2/20, E04B 1/78

(54) **Process for preparing heat-insulating structural elements and products obtained thereby**
Verfahren zur Herstellung von wärmedämmenden Bauelementen und erhaltene Produkte
Procédé de fabrication d'éléments de construction isolants et produits obtenus

(30) Priority: 26.07.1989 IT 2133689
(43) Date of publication of application: 30.01.1991
(73) Proprietor: CENTRO SVILUPPO SETTORI IMPIEGO S.r.l., I-20121 Milan (IT)
(72) Inventor: Addeo, Antonio, I-80030 S. Paolo Belsito, Napoli (IT); Bonvini, Alberto, I-20064 Gorgonzola, Milan (IT); Reggiani, Romano, I-46100 Mantova (IT); Vezzoli, Annibale, I-22060 Carugo, Como (IT)
(74) Representative: Barz, Peter, Dr.

(56) References cited:
- EP-A- 0 027 477
- DE-A- 1 504 304
- GB-A- 0 964 203
- US-A- 3 650 871
- US-A- 4 087 501
- US-A- 4 524 037

## Description

The present invention relates to a process for preparing heat-insulating structural elements.

More particularly, the present invention relates to a process for preparing heat-insulating structural elements and to the products obtained thereby.

Still more particularly, the present invention relates to a process for preparing heat-insulating structural elements, according to which foamed materials are obtained by means of the use of foaming agents not belonging to the class of chlorofluoroalkanes.

The term "heat insulating structural element", as used herein, covers any rigid, circular or polygonal structural element for use in the fields of transportation, electrical home appliances, building industry, car industry, telecommunications, business machines, etc., such as doors, covers, cases, in particular for refrigerators or freezers, panels, containers (for example, for portable heat-insulated bags), etc.

According to the prior art, articles of the above types are generally obtained by starting from two half-shells which are mechanically bound together by soldering or adhesive-bonding, the hollow space defined between the two half-shells being subsequently filled with foamed polyurethane.

According to another technique, disclosed in IT-A-21 815 A/87, a hollow case of thermoplastic polymer is formed by blow-moulding, and said hollow case is then filled with a reactive polyurethane mixture, which is then foamed.

Foamed polyurethane, used as the heat-insulating material in both of the above methods, is obtained by starting from a formulation which is composed of an organic diisocyanate, a polyol, a silicone surfactant, a polymerization catalyst and a foaming agent belonging to the class of chlorofluoroalkanes, such as Freon^{(R)}.

At present, the use of foamed polyurethane as heat-insulating material causes environmental problems in that the foaming agents of the chlorofluoroalkane type such as Freon^{(R)} are regarded to be one of the main causes of change and destruction of the ozone layer in the stratosphere.

Unfortunately, the problem of replacing polyurethane with an equivalent material is not easy to be solved in that this polymer, by being capable of being foamed in situ according to the well-known R.I.M. (reaction injection moulding) technique, makes it possible to obtain rigid, self-supporting structural elements even if the outer case is made of thermoplastic polymer, i.e., is not in the form of a metal sheet.

This is due to the fact that polyurethane, by reacting in situ adheres perfectly to the inner walls of the case, thus giving rise to the formation of a single structural body.

US-A-3,650,871, on which the preamble of present claim 1 is based, discloses a method for producing insulated panels of a honeycomb structure surrounded by a frame, in which the panels are continuously fed below a discharging device which fills the honeycomb with polystyrene, granular or ground waste material having insulating properties. Before or after filling, the honeycomb structure may be closed by a subjacent cover board or sheet, and an upper cover board or sheet is applied after filling, the upper and lower cover boards or sheets being adhesively bonded to the honeycomb.

GB-A-964203 is directed to a method of producing a heat-insulated casing, for example a refrigerator casing, which consists of a self-supporting casing wall provided at the inner side or at the outer side with a layer of heat-insulating material, wherein the said self-supporting casing wall consists of a synthetic plastics material and is shaped to the desired form by means of an injection molding process, wherein the heat-insulating material consists of a synthetic plastics material in the form of a foam which is applied to the inner side of the molded casing wall or to the outer side thereof by casting a liquid synthetic plastics material mixed with a foaming agent and with an agent suited to dissolve slightly the surface of the casing wall so that the foam layer, after its setting, is firmly bonded to the casing wall to which it has been applied.

EP-A-27477, on which the preamble of present claim 10 is based, discloses a brick with cavities which are open at at least one side, said cavities being filled with sintered particles of a thermoplastic polymer, e.g., foamed polystyrene.

US-A-4,524,037 describes a process for forming a foam plastic article using a mold with a mold cavity and a pair of electrodes across which an RF field may be impressed. The foam material that is to be processed is inserted into the mold and is then compressed. An RF heating field is applied while maintaining the foam material compressed and after the heat is terminated, the foam material is permitted to expand to conform to a mold shape as the material cools.

A process has now, surprisingly, been found which allows heat-insulating structural elements to be obtained by using foamed thermoplastic materials which do not require the use of chlorofluorocarbons as foaming agents and which, compared with the products of the prior art, show the same or even better insulating characteristics at the same thickness. Simultaneously, said process makes it possible to keep the relevant technologies of production at the industrial level nearly unchanged.

The subject matter of the present invention is, therefore, a process for preparing heat-insulating structural elements, which process comprises the following steps:
(a) applying to the convex portion of a first half-shell a layer of beads made of semi-foamed or foamed thermoplastic polymer, so as to form a layer of substantially uniform thickness;
(b) sintering the beads;
(c) optionally, drying the sintered layer; and
(d) applying to the composite thus obtained a second half-shell which matches the shape of the sintered layer.

The sintering of the beads can, for example, be carried out by means of high-temperature steam, hot air and/or radio frequency.

According to the present invention, the beads of thermoplastic material preferably have a substantially spherical shape with an average diameter of from 0.1 to 2 mm.

Any thermoplastic material capable of yielding foamed or semi-foamed beads can be used in the instant process, although polystyrene and impact-resistant polystyrene are preferred.

Examples of alternative materials are polystyrene modified with polar monomers such as acrylonitrile, polyolefins such as polyethylene, polypropylene, poly(vinyl chloride), etc., acrylic or methacrylic resins such as poly(methyl methacrylate), etc., or mixtures thereof.

The beads of thermoplastic materials in foamed or semi-foamed form, are products known in the art and available on the market, for example, under the trade name EXTIR^{(R)} (Montedison S.p.A.) or can be produced according to the process disclosed in US-A-2 983 692.

The sintering of the beads is preferably carried out with steam at a temperature of from 100 to 200°C.

The sintered layer has a substantially uniform thickness of generally less than 10 cm, preferably ranging from 2 to 5 cm. Therefore, this layer reproduces the shape of the convex portion of the first half-shell.

At the end of the sintering step, the resulting composite can be conveyed to a drying station in order to eliminate any traces of moisture contained therein. The drying operation, which is preferably carried out when the sintering has been effected with steam, is generally conducted under atmospheric pressure and at a temperature of from 50 to 70°C, optionally in the presence of air circulation.

Preferably, the first half-shell is composed of a single piece, has a thickness within the range of from 1 to 5 mm, and may be made of a plate of thermoplastic polymer shaped according to the design of the desired heat-insulating structural element.

Examples of thermoplastic polymers which can be used in order to prepare the first half-shell are: polystyrene, impact-resistant polystyrene, polystyrene modified with polar monomers such as acrylonitrile, ABS resins, poly(vinyl chloride), high-, medium- and low-density polyethylene, polypropylene, acrylic or methacrylic resins such as pole(methyl methacrylate), polyphenylethers, polyester resins such as PET and PBT etc., or mixtures thereof.

Inasmuch as it does not perform a supporting action but only has to serve as containment and protection means for the heat-insulating layer, the second half shell can be composed of a single piece, or it can comprise a plurality of pieces, also made of different materials such as, for example, a metal plate or a metal grid, which pieces are connected to one another.

For example, when the heat-insulating structural element is a refrigerator cabinet, the second half-shell may consist of three pieces to be combined with one another. The first two pieces, made of a metal sheet, are used in order to form the side (external) walls of the cabinet, and the third piece, made of a metal grid, is used as bottom wall onto which the coil for the heat exchange of the refrigerator fluid is to be applied.

On the other hands if the heat insulating structural element represents, for example, a refrigerator door a second half-shell, made of a single piece shaped so as to match the sintered layer, is preferably used.

The heat-insulating structural elements according to the present invention hence comprise a first half-shell, a heat-insulating layer formed by a layer of beads of foamed or half-foamed thermoplastic polymer sintered onto said first half-shell in a manner such as to reproduce the shape thereof, and a second half-shell acting as a sealing element and matching the shape of the sintered layer.

Generally, the heat-insulating structural elements according to the present invention have a heat conductivity of less than 0.030 kcal/mh°C, as a function of their volumetric mass, as measured according to UNI 7819/7891/7745, and a compression strength, according to UNI 6350, of more than 1 kg/cm², usually of from 1.8 to 2.9 kg/cm².

## Claims

1. Process for preparing a heat-insulating structural element by applying to one side of a first outer element a granular thermoplastic polymer, heating said granulate and covering it with a second outer element, characterized in that it comprises the steps of:
(a) applying to the convex portion of a first half-shell a layer of beads of semi-foamed or foamed thermoplastic polymer, so as to form a layer of substantially uniform thickness;
(b) sintering the beads;
(c) optionally, drying the sintered layer; and
(d) applying to the composite thus obtained a second half-shell which matches the shape of the sintered layer.

2. Process according to claim 1, wherein the beads of thermoplastic material have a substantially spherical shape and an average diameter of from 0.1 to 2 mm.

3. Process according to any one of claims 1 and 2, wherein the thermoplastic polymer is polystyrene or impact-resistant polystyrene.

4. Process according to any one of the preceding claims, wherein the sintering of the beads is carried out with steam at a temperature of from 100 to 200°C and the sintered layer is dried.

5. Process according to any one of claims 1 to 3, wherein the sintering of the beads is carried out with hot air and/or by means of radio frequency.

6. Process according to any one of the preceding claims, wherein the sintered layer has an essentially uniform thickness of less than 10 cm, particularly of from 2 to 5 cm.

7. Process according to any one of the preceding claims, wherein the drying of the sintered layer is carried out under atmospheric pressure, at a temperature of from 50 to 70°C, optionally in the presence of air circulation.

8. Process according to any one of the preceding claims, wherein the first half-shell is composed of a single piece and is made from a plate of thermoplastic polymer.

9. Process according to any one of the preceding claims, wherein the second half-shell is composed of a single piece or of a plurality of pieces to be linked to one another.

10. Heat-insulating structural element comprising a hollow structure the void space whereof is filled with sintered beads of foamed or semi-foamed thermoplastic material, characterized in that it comprises a first half-shell, a heat-insulating layer formed by a layer of beads of foamed or semi-foamed thermoplastic polymer sintered onto said first half-shell in a manner such as to reproduce the shape of the latter and a second half-shell acting as a sealing element and matching the shape of the sintered layer.

## Patentansprüche

1. Verfahren zur Herstellung eines wärmeisolierenden Bauelements durch Auftragen eines kornförmigen thermoplastischen Polymers auf eine Seite eines ersten äußeren Elements, Erwärmen des Granulats und Bedecken desselben mit einem zweiten äußeren Element, dadurch gekennzeichnet, daß es die folgenden Stufen umfaßt:
(a) Auftragen einer Schicht aus Kügelchen von halbgeschäumtem oder geschäumtem thermoplastischem Polymer auf den konvexen Teil einer ersten Halbschale, um eine Schicht von im wesentlichen gleichmäßiger Dicke zu bilden;
(b) Sintern der Kügelchen;
(c) gegebenenfalls Trocknen der gesinterten Schicht; und
(d) Aufbringen einer zweiten Halbschale, die zur Gestalt der gesinterten Schicht paßt, auf das so erhaltene Verbundmaterial.

2. Verfahren nach Anspruch 1, in welchem die Kügelchen von thermoplastischem Material eine im wesentlichen kugelförmige Gestalt und einen durchschnittlichen Durchmesser von 0,1 bis 2 mm aufweisen.

3. Verfahren nach irgendeinem der Ansprüche 1 und 2, in welchem das thermoplastische Polymer Polystyrol oder schlagzähes Polystyrol ist.

4. Verfahren nach irgendeinem der vorangehenden Ansprüche, in welchem das Sintern der Kügelchen mit Wasserdampf bei einer Temperatur von 100 bis 200°C durchgeführt wird und die gesinterte Schicht getrocknet wird.

5. Verfahren nach irgendeinem der Ansprüche 1 bis 3, in welchem das Sintern der Kügelchen mit heißer Luft und/oder mit Hilfe von Radiofrequenz durchgeführt wird.

6. Verfahren nach irgendeinem der vorangehenden Ansprüche, in welchem die gesinterte Schicht eine im wesentlichen einheitliche Dicke von weniger als 10 cm, insbesondere von 2 bis 5 cm, aufweist.

7. Verfahren nach irgendeinem der vorangehenden Ansprüche, in welchem das Trocknen der gesinterten Schicht unter Atmosphärendruck bei einer Temperatur von 50 bis 70°C, gegebenenfalls in Anwesenheit von Umluft, durchgeführt wird.

8. Verfahren nach irgendeinem der vorangehenden Ansprüche, in welchem die erste Halbschale aus einem einzigen Stück zusammengesetzt ist und aus einer Platte aus thermoplastischem Polymer hergestellt ist.

9. Verfahren nach irgendeinem der vorangehenden Ansprüche, in welchem die zweite Halbschale aus einem einzigen Stück oder aus einer Mehrzahl von miteinander zu verbindenden Stücken zusammengesetzt ist.

10. Wärmeisolierendes Bauelement, umfassend eine Hohlstruktur, deren Hohlraum mit gesinterten Kügelchen von geschäumtem oder halbgeschäumtem thermoplastischem Material gefüllt ist, dadurch gekennzeichnet, daß es umfaßt eine erste Halbschale, eine wärmeisolierende Schicht, gebildet durch eine Schicht aus Kügelchen von geschäumtem oder halbgeschäumtem thermoplastischem Polymer, die so auf die erste Halbschale gesintert ist, daß sie die Gestalt der letzteren reproduziert, und eine zweite Halbschale, die als verschließendes Element fungiert und zur Gestalt der gesinterten Schicht paßt.

## Revendications

1. Procédé permettant de préparer un élément de construction isolant thermique consistant à appliquer un polymère thermoplastique sous forme de granules sur une face d'un premier élément extérieur, à chauffer lesdits granules et à les recouvrir avec un second élément extérieur, lequel procédé est caractérisé en ce qu'il comprend les étapes consistant
(a) à appliquer sur la partie convexe d'une première demi-coque une couche de billes d'un polymère thermoplastique expansé ou semi-expansé de manière à former une couche d'une épaisseur sensiblement uniforme,
(b) à fritter les billes,
(c) à sécher éventuellement la couche frittée, et
(d) à appliquer sur le composite ainsi obtenu une seconde demi-coque qui épouse la forme de la couche frittée.

2. Procédé conforme à la revendication 1 dans lequel les billes de matière thermoplastique ont une forme quasi sphérique et un diamètre moyen compris entre 0,1 et 2 mm.

3. Procédé conforme à une quelconque des revendications 1 et 2 dans lequel le polymère thermoplastique est le polystyrène ou le polystyrène choc.

4. Procédé conforme à une quelconque des revendications précédentes dans lequel le frittage des billes se fait à la vapeur à une température comprise entre 100 et 200 °C et dans lequel la couche frittée est séchée.

5. Procédé conforme à une quelconque des revendications 1 à 3 dans lequel le frittage des billes se fait à l'air chaud et/ou au moyen de radiofréquences.

6. Procédé conforme à une quelconque des revendications précédentes dans lequel la couche frittée a une épaisseur quasi uniforme, inférieure à 10 cm, en particulier comprise entre 2 et 5 cm.

7. Procédé conforme à une quelconque des revendications précédentes dans lequel le séchage de la couche frittée est effectué à pression atmosphérique à une température comprise entre 50 et 70 °C, éventuellement en présence d'une circulation d'air.

8. Procédé conforme à une quelconque des revendications précédentes dans lequel la première demi-coque est composée d'une seule pièce et a été fabriquée à partir d'une plaque de polymère thermoplastique.

9. Procédé conforme à une quelconque des revendications précédentes dans lequel la deuxième demi-coque est composée d'une seule pièce ou de plusieurs pièces destinées à être liées les unes aux autres.

10. Elément de construction isolant thermique comprenant une structure creuse dont le vide est rempli de billes frittées en une matière thermoplastique expansée ou semi-expansée, caractérisé en ce qu'il comprend une première demi-coque, une couche d'isolation thermique formée par une couche de billes en polymère thermoplastique expansé ou semi-expansé frittée sur ladite première demi-coque de manière à reproduire la forme de cette dernière et d'une seconde demi-coque jouant le rôle d'élément de fermeture et qui épouse la forme de la couche frittée.
